# EUROPÄISCHE PATENTSCHRIFT

(11) **EP 4 517 038 B1**
(45) Veröffentlichungstag und Bekanntmachung des Hinweises auf die Patenterteilung: **18.03.2026**
(21) Anmeldenummer: 24196478.2
(22) Anmeldetag: 26.08.2024
(51) Int. Cl.: E06B 1/60

(54) **TRENNWANDELEMENT MIT DISTANZVORRICHTUNG**
PARTITION WALL ELEMENT WITH DISTANCING DEVICE
ÉLÉMENT DE CLOISON DE SÉPARATION AVEC DISPOSITIF D'ESPACEMENT

(30) Priorität: 30.08.2023 DE 202023104934 U
(43) Veröffentlichungstag der Anmeldung: 05.03.2025
(73) Patentinhaber: Alumis GmbH & Co. KG, 33829 Borgholzhausen (DE)
(72) Erfinder: BESSELMANN, Matthias, 48231 Warendorf (DE); PALSMEYER, David, 33617 Bielefeld (DE); BRINKMANN, Günter, 48361 Beelen (DE)
(74) Vertreter: Dantz, Jan Henning

(56) Entgegenhaltungen:
- GB-A- 2 474 086
- NL-B1- 1 040 763
- US-B2- 9 879 420

## Beschreibung

Die vorliegende Erfindung betrifft ein Trennwandelement.

Zur Positionierung und Orientierung von Fenstern oder Türen in ihrer Einbausituation gibt es Justierelemente oder Distanzvorrichtungen, die höhenverstellbar sind. Durch den Einsatz solcher Distanzvorrichtungen wird insbesondere ein waagerechter Einbau der Fenster oder Türen, vor allem ihrer Rahmen, ermöglicht. DE 10 2019 108 774 A1 offenbart eine solche Distanzvorrichtung mit den Merkmalen des Oberbegriffs des Anspruchs 1, wobei das Unterteil und das Stellelement jeweils als Zahnstangen ausgebildet sind, sodass sie verzahnt ineinandergreifen können, und wobei das Stellelement mittels eines an dem Unterteil angeordneten Zahnrads für eine Breiteneinstellung der Distanzvorrichtung entlang ihrer Längserstreckung verstellbar ist.

Bei Distanzvorrichtungen gemäß diesem Stand der Technik besteht das Problem, dass die Ausbildung des Unterteils und des Stellelementes aufwendig ist und zu Toleranzproblemen führen kann und dass eine Einstellung der Breite der Distanzvorrichtung nur für ausgewählte Breiten möglich ist. Auch die Herstellung und Montage des Zahnrads ist verhältnismäßig aufwendig.

GB 2 474 086 A offenbart ein Trennwandelement mit den Merkmalen des Oberbegriffs des Anspruchs 1.

US 9 879 420 B2 offenbart ein Trennwandelement .

Es ist Aufgabe der vorliegenden Erfindung ein Trennwandelement anzugeben, das besonders einfach herzustellen ist.

Die vorliegende Erfindung löst dieses Problem mit einem Trennwandelement mit den Merkmalen des Anspruchs 1.

Das erfindungsgemäße Trennwandelement zur Verbindung von Türen, Fenstern und/oder Glasscheiben der Fenster oder von Wänden miteinander, weist zwei plattenförmige Wandelemente auf, die so aneinander befestigt sind, dass zwischen ihnen ein Zwischenraum ausgebildet ist, wobei das Trennwandelement mindestens eine erfindungsgemäße Distanzvorrichtung umfasst. Der Zwischenraum in dem Trennwandelement kann so besonders vorteilhaft und stabil ausgebildet werden. Mittels des Trennwandelements können Fenster, Türen oder Wände einfach abschließend miteinander verbunden werden, wobei gleichzeitig zusätzlicher Bauraum für eine insbesondere abdeckbare Installation weiterer Elemente geschaffen ist. Die Distanzvorrichtung für ein Fenster, eine Tür oder ein Trennwandelement weist ein im Wesentlichen keilförmiges Unterteil und ein im Wesentlichen keilförmiges Stellelement auf, das entlang einer Längserstreckung des Unterteils so verstellbar ist, dass eine senkrecht zu der Längserstreckung verlaufende Breite der Distanzvorrichtung eingestellt werden kann. Das Stellelement ist mittels eines parallel zur Richtung der Breite der Distanzvorrichtung verlaufenden Befestigungsmittels klemmend an dem Unterteil fixierbar, sodass die Breite der Distanzvorrichtung stufenlos einstellbar ist, wodurch sie besonders flexibel eingesetzt werden kann. Mittels der Erfindung wird außerdem eine Ausbildung eines aufwendigen Zahnstangengetriebes vermieden, sodass die Distanzvorrichtung einfach herstellbar ist und hierdurch kann die Breite der Distanzvorrichtung vorteilhaft eingestellt werden, was ihre Handhabung einfach und flexibel gestaltet und ihre Anwendungsmöglichkeiten erweitert. Das Trennwandelement weist zur Fixierung der Wandelemente aneinander mindestens eine an einem der Wandelemente fixierte Stellleiste, an der die mindestens eine Distanzvorrichtung montiert ist, und mindestens eine an dem anderen der Wandelemente fixierte Halteleiste, an der mindestens eine Halterung fixiert ist, auf, wobei mindestens eine Fixierung die mindestens eine Halterung und die mindestens eine Stellleiste zur Befestigung der Wandelemente aneinander insbesondere auf gegenüberliegenden Seiten verbindet, sodass zwischen mindestens einer der mindestens einen Stellleiste und mindestens einer der mindestens einen Halterung mindestens eine Lücke ausgebildet ist und die mindestens eine Distanzvorrichtung zwischen der mindestens einen Stellleiste und der mindestens einen Halterung in dieser Lücke klemmt. Dies ermöglicht eine vorteilhafte Montage der Wandelemente zum Trennwandelement.

Das Befestigungsmittel ist erfindungsgemäß für eine vorteilhafte Einstellung der Breite der Distanzvorrichtung in einer Nut des Stellelements angeordnet, sodass das Stellelement zur Breiteneinstellung der Distanzvorrichtung mittels des Befestigungsmittels entlang der Nut geführt werden kann.

Insbesondere kann das Stellelement über mindestens eine Führung entlang mindestens einer Schiene auf einer Oberseite des Unterteils geführt sein. Hierdurch können das Stellelement und das Unterteil auf einfache Weise besonders vorteilhaft zueinander angeordnet werden, um beispielsweise eine Kraftübertragung zu optimieren. Der Nutboden und/oder der Schlitz verlaufen vorzugsweise parallel zu der Oberseite, sodass das Stellelement bei einer Verstellung auch in der entsprechenden Richtung versetzt wird, also mit einer vertikalen und mit einer horizontalen Komponente der Verschiebung relativ zu der Längserstreckung des Unterteils.

Das Stellelement umfasst insbesondere mindestens eine Markierung, vorzugsweise mehrere Markierungen, zur Auswahl der Breiteneinstellung der Distanzvorrichtung aus einer Mehrzahl von Breiteneinstellungen. Bevorzugt kann das Unterteil zudem mindestens einen Zeiger aufweisen, der auf die ausgewählte Markierung zeigen kann, die noch bevorzugter eine Breite der Distanzvorrichtung in cm oder mm angeben kann. Die Markierungen können alternativ auch an dem Unterteil und der Zeiger an dem Stellelement angeordnet sein. Besonders bevorzugt geben die Markierungen jeweils Dimensionierungen einstellbarer Breiteneinstellungen der Distanzvorrichtung an.

In einer bevorzugten Ausführungsform kann die Distanzvorrichtung in montierter Position an dem Fenster oder der Tür so angeordnet sein, dass die Längserstreckung des Unterteils horizontal verläuft. Noch bevorzugter kann die Distanzvorrichtung an dem Rahmen eines Fensters oder einer Tür montiert sein, sodass deren Einbau für einen Benutzer besonders einfach ist. Für eine vorteilhafte Montage kann das Unterteil insbesondere mindestens ein Fixierelement aufweisen, das in mindestens einer Vertiefung angeordnet werden kann, um das Unterteil an einem Rahmen oder einer Nut für einen Rahmen eines Fensters oder einer Tür zu befestigen.

Gemäß einer Ausführungsform der vorliegenden Erfindung umfasst oder ist das Befestigungsmittel mindestens eine oder genau eine Schraube oder ein Niet und/oder die Nut weist bevorzugt einen Nutboden und mindestens einen Schlitz auf.

Ein Kopf der Schraube oder des Niets kann vorzugsweise auf dem Nutboden aufliegen, sodass der Nutboden und folglich das Stellelement auf einfache Weise mittels Festdrehens der Schraube oder Befestigung des Niets klemmend fixiert werden kann. Insbesondere verläuft eine Unterseite des Kopfes der Schraube im Wesentlichen parallel zum Nutboden.

Eine Fixierung der Schraube kann insbesondere durch Einschraubens in ein Loch in der Oberseite des Unterteils erfolgen. Die Schraube kann hierbei für eine einfache Montage bevorzugt in das Unterteil und/oder in ein Gewinde des Unterteils eingeschraubt sein, wobei sie alternativ oder zusätzlich auch mittels mindestens einer Mutter auf der gegenüberliegenden Seite des Unterteils fixiert sein kann. Dies ermöglicht eine materialsparende Ausbildung der Distanzvorrichtung, da das Loch nicht ausreichend tief für ein angemessenes Gewinde für die Schraube sein muss.

Insbesondere ist der Kopf der Schraube vollständig von der Nut aufgenommen, sodass die Oberfläche des Stellelements vollständig für ein Aufliegen auf oder an einer anderen Fläche genutzt werden kann.

Die Breite der Distanzvorrichtung kann in einer besonders bevorzugten Ausführungsform stufenlos einstellbar sein, sodass sie besonders flexibel eingesetzt werden kann.

Eine minimale einstellbare Breite der Distanzvorrichtung in Breitenrichtung kann optional eine maximale Breite des Unterteils und eine maximale einstellbare Breite der Distanzvorrichtung in Breitenrichtung kann optional die Summe aus der maximalen Breite des Unterteils und einer minimalen Breite des Stellelementes sein, die optional der Summe aus einer minimalen Breite des Unterteils und einer maximalen Breite des Stellelementes entsprechen kann. Die Distanzvorrichtung kann hierdurch im maximal eingeschobenen Zustand des Stellelementes im Wesentlichen quaderförmig ausgebildet sein, was für ihren Einsatz von Vorteil ist.

Die Breite der Distanzvorrichtung kann in einer besonders bevorzugten Ausführungsform stufenlos einstellbar sein, sodass sie besonders flexibel eingesetzt werden kann.

Die minimalen Breiten können bevorzugt jeweils etwa 0,5 cm bis 3 cm und noch bevorzugter etwa 1 cm bis 2 cm und die maximalen Breiten können bevorzugt jeweils etwa 5 mm bis 7 cm und noch bevorzugter etwa 3 cm bis 6 cm entsprechen. Insbesondere können auch mehrere Stellelemente nebeneinander und/oder übereinander mit jeweils entsprechend unterschiedlichen Breiten vorgesehen sein, sodass der Benutzer der Distanzvorrichtung aus diesen den für ihn relevantesten Bereich für die Breiteneinstellung auswählen kann.

In einer besonders bevorzugten Ausführungsform kann die Distanzvorrichtung so ausgebildet sein, dass sie einer Vibration des Fensters, Tür oder Trennwandelement entgegenwirken kann, um eine Schalldämmung des Fensters zu verbessern.

Das Unterteil und/oder das Stellelement sind bevorzugt aus einem formstabilen, beziehungsweise festen, starren Material, insbesondere aus Kunststoff gefertigt und bevorzugt mit mindestens einem elastischen Material beschichtet. Hierdurch ist die Distanzvorrichtung kostengünstig herstellbar und die Schalldämmung kann bevorzugt besonders gut gewährleistet sein. Das Unterteil und/oder das Stellelement kann beispielsweise aus spritzgegossenem Kunststoff hergestellt sein.

In einer weiteren Ausführungsform kann das Unterteil aus gebogenem Metallblech und das Stellelement aus, insbesondere spritzgegossenem, Kunststoff hergestellt sein, sodass die Distanzvorrichtung besonders robust sein kann. Mindestens eines der Bauteile könnte optional auch mittels Zinkdruckgusses hergestellt sein.

Das Stellelement weist vorzugsweise in einem Endabschnitt eine Fläche auf, sodass sie vorteilhaft in einem Eckabschnitt des Fensters oder der Tür anwendbar sein kann.

In einer Ausführungsform weist das Stellelement für eine einfache Herstellung senkrecht zu seiner Keilform einen im Wesentlichen stadionförmigen Querschnitt auf. Das Stellelement kann außerdem für eine erhöhte Griffigkeit mehrere Kerben aufweisen.

Bevorzugt ist mindestens eine Glasscheibe in der mindestens einen Lücke angeordnet und/oder klemmend zwischen der mindestens einen Stellleiste und der mindestens einen Halterung, die sich bevorzugt entlang der gesamten Glasscheibe erstrecken, fixiert. Die mindestens eine Glasscheibe kann insbesondere eine Isolierglasscheibe sein.

Insbesondere kann das Trennwandelement in einer Variante genau eine Lücke aufweisen, die zwischen genau einer Stellleiste und/oder genau einer Halterung ausgebildet sein kann.

Bevorzugt ist in dem Zwischenraum und/oder in der Lücke mindestens eine elektrische Vorrichtung, wie beispielsweise Teile einer Elektronikschaltung, ein Antrieb oder eine Überwachungsvorrichtung eingebaut. Insbesondere kann mindestens eines der Wandelemente mindestens eine Aussparung aufweisen, in die zum Beispiel ein Lichtschalter, eine Steckdose oder eine Sicherungsvorrichtung eingesetzt sein kann, deren Stromleitungen, Gehäuse oder Schließmechanismus usw. zumindest teilweise in dem Zwischenraum angeordnet und so versteckt und einfach verlegbar und/oder erreichbar sein können.

Vorzugsweise sind die Wandelemente für eine einfache Montage und ein ansprechendes Erscheinungsbild im Wesentlichen parallel zueinander angeordnet.

In einer bevorzugten Ausführungsform weist das Trennwandelement insbesondere zwischen mindestens einer der mindestens einen Halterung und der mindestens einen Stellleiste die mindestens eine Lücke auf, wobei deren Dimensionierung durch die Breiteneinstellung der mindestens einen Distanzvorrichtung einstellbar ist und in die besonders bevorzugt mindestens eine Glasscheibe eines Fensters einsetzbar sein kann und/oder eingesetzt ist.

Noch bevorzugter ist eine Distanz zwischen den Wandelementen senkrecht zu mindestens einem der Wandelemente durch Einstellung der Breite der mindestens einen Distanzvorrichtung veränderbar, sodass eine Größe des Zwischenraums an eine Einbausituation des Trennwandelements und/oder an die Verwendung des Zwischenraums anpassbar sein kann. Das Trennwandelement kann auf diese Weise beispielsweise auch für unterschiedlich dicke Glasscheiben usw. eingesetzt werden. Anstelle einer Glasscheibe kann optional alternativ oder zusätzlich ein Wandelement, beziehungsweise eine Wand eingesetzt sein. Die Wandelemente können jegliche Flächenelemente wie Glasscheiben, Holz-, Fliesen-Elemente sein oder Elemente mit opaken, transluzenten, transparenten Eigenschaften umfassen.

Das mindestens eine Trennwandelement umfasst insbesondere mindestens eine Halteleiste, die an mindestens einem der Wandelemente fixiert ist und mindestens eine Stellleiste, die an dem anderen Wandelement anliegt und/oder fixiert ist, wobei auch mehrere Distanzvorrichtungen an einer gemeinsamen Stellleiste angeordnet sein können, beziehungsweise sich diese teilen können. Die mindestens eine Halteleiste ist zur Befestigung der Wandelemente aneinander bevorzugt durch Aufstecken auf mindestens eine an der mindestens einen Stellleiste fixierte Halterung montiert, wobei die mindestens eine Halteleiste insbesondere rastend an der mindestens einen Halterung fixierbar ist. Die Halteleiste und/oder die Stellleiste sind insbesondere mittels Klebens oder Schweißens und/oder kraftschlüssig an dem jeweiligen Wandelement fixiert.

Die vorliegende Erfindung wird nachfolgend anhand mehrerer Zeichnungen näher erläutert. Es zeigen:
- Fig. 1: eine isometrische Ansicht einer erfindungsgemäßen Distanzvorrichtung,
- Fig. 2a bis 2d: mehrere Ansichten eines Unterteils,
- Fig. 3a bis 3d: mehrere Ansichten eines Stellelements,
- Fig. 4a bis 4d: mehrere Ansichten eines Stellelements gemäß einer weiteren Ausführungsform,
- Fig. 5a bis 5d: mehrere Ansichten eines Stellelements gemäß noch einer weiteren Ausführungsform,
- Fig. 6: eine isometrische Ansicht einer erfindungsgemäßen Distanzvorrichtung mit dem Stellelement aus Fig. 4a bis 4d,
- Fig. 7: eine isometrische Ansicht einer erfindungsgemäßen Distanzvorrichtung mit dem Stellelement aus Fig. 5a bis 5d,
- Fig. 8: eine isometrische Ansicht eines erfindungsgemäßen Trennwandelements in einer Einbausituation,
- Fig. 9: eine weitere Ansicht des Trennwandelements aus Fig. 8,
- Fig. 10: eine Schnittansicht des Trennwandelements aus Fig. 8,
- Fig. 11: eine Schnittansicht eines erfindungsgemäßen Trennwandelements,
- Fig. 12: eine weitere Ansicht des Trennwandelementes aus Fig. 11.

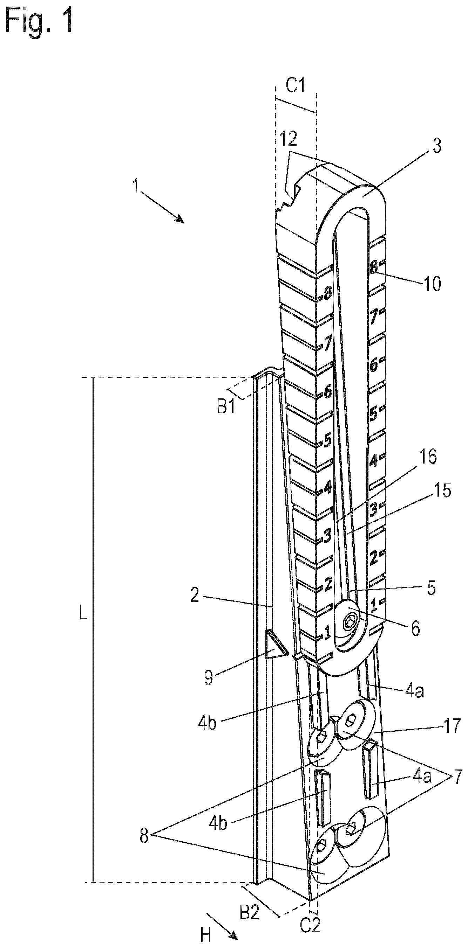

In Fig. 1 ist eine erfindungsgemäße Distanzvorrichtung 1 für ein Fenster oder für eine Tür dargestellt. Die Distanzvorrichtung 1 weist ein im Wesentlichen keilförmiges Unterteil 2 und ein im Wesentlichen keilförmiges Stellelement 3 auf. Das Stellelement 3 weist eine Nut 5 mit einem Nutboden 15 auf, der einen Schlitz 16 umfasst. Mittels eines, hier als Schraube ausgebildeten, Befestigungsmittels 6 ist das Stellelement 3 an dem Unterteil 2 klemmend fixiert, indem die Schraube, die in dem Schlitz 16 angeordnet ist, so in das Unterteil 2 eingedreht ist, dass ein Kopf der Schraube auf dem Nutboden 15 aufliegt, sodass eine Klemmkraft zwischen dem Befestigungsmittel 6 und dem Unterteil 2 den Nutboden 15 klemmend an dem Unterteil 2 hält und somit fixiert. Der Kopf der Schraube ist vollständig von der Nut 5 aufgenommen.

Das Unterteil 2 weist optional mindestens ein Fixierelement 7 auf, das in mindestens einer Vertiefung 8 angeordnet ist, um das Unterteil an einem Rahmen oder einer Nut für einen Rahmen eines Fensters oder einer Tür zu befestigen. Im dargestellten Ausführungsbeispiel der Fig. 1 weist das Unterteil 2 insbesondere vier als Schrauben ausgebildete Fixierelemente 7, die in vier Vertiefungen 8 angeordnet und an einem Rahmen eines Fensters oder einer Tür fixierbar, insbesondere einschraubbar, sind.

In einem zumindest teilweise gelösten Zustand des Befestigungsmittels 6 ist das Stellelement 3 so entlang der Längserstreckung L des Unterteils 2 verstellbar, dass eine Breite der Distanzvorrichtung 1 senkrecht zu der Längserstreckung L, also in Breitenrichtung H, eingestellt werden kann. Hierzu kann das Stellelement 3 entlang einer schräg verlaufenden Oberseite 17 des Unterteils 2 verschoben werden, wobei der Nutboden 15 und/oder der Schlitz 16 bevorzugt parallel zu der Oberseite 17 verläuft. Das Stellelement 3 ist dabei über mindestens eine Führung 12, hier über zwei Führungen 12, entlang mindestens einer Schiene 4, hier zwei Schienen 4a, 4b, auf der Oberseite 17 geführt, sodass der Schlitz 16 in der Nut 5 des Stellelements 3 an dem Befestigungsmittel 6 geführt ist. Hierdurch verändert sich die Position des Nutbodens 15 an dem Stellelement 3, bei einem Verstellen des Stellelementes 3. In einer verschobenen Position führt folglich ein Eindrehen des Befestigungsmittels 6, also der Schraube, zu einer klemmenden Fixierung des Nutbodens 15 in dieser Position und somit zu einer verstellten Breite der Distanzvorrichtung 1.

Optional weist das Stellelement 3 gemäß Fig. 1 mindestens eine Markierung 10, hier mehrere Markierungen 10 auf, mittels denen ein Benutzer der Distanzvorrichtung 1 eine Breiteneinstellung erkennen und/oder auswählen kann. Hierzu weist das Unterteil 2 außerdem mindestens einen Zeiger 9 auf, der auf die jeweils eingestellte Markierung 10 zeigt, die insbesondere eine Breite der Distanzvorrichtung in cm oder mm angibt. Die Markierung 10 kann alternativ auch an dem Unterteil 2 und der Zeiger 9 an dem Stellelement 3 angeordnet sein. In montierter Position an dem Fenster oder der Tür ist die Distanzvorrichtung 1 bevorzugt so angeordnet, dass die Längserstreckung L des Unterteils 2 horizontal verläuft.

Eine minimale einstellbare Breite der Distanzvorrichtung 1 in Breitenrichtung H ist optional eine maximale Breite B2 des Unterteils 2 und eine maximale einstellbare Breite der Distanzvorrichtung 1 in Breitenrichtung H ist optional die Summe aus der maximalen Breite B2 des Unterteils 2 und einer minimalen Breite C2 des Stellelementes 3, die zudem bevorzugt der Summe aus einer minimalen Breite B1 des Unterteils 2 und einer maximalen Breite C1 des Stellelementes 3 entspricht, sodass die Distanzvorrichtung 1 im maximal eingeschobenen Zustand des Stellelementes 3 im Wesentlichen quaderförmig ist. Die minimalen Breiten B1 und C2 und die maximalen Breiten B2 und C1 sind bevorzugt an einander entgegengesetzten Enden des Unterteils 2 und des Stellelementes 3 entlang einer Richtung R der Längserstreckung L des Unterteils 2 ausgebildet. Die minimalen Breiten B1 und C2 entsprechen jeweils etwa 0,5 cm bis 3 cm und maximalen Breiten B2 und C1 entsprechen jeweils etwa 5 mm bis 7 cm und noch bevorzugter etwa 3 cm bis 6 cm.

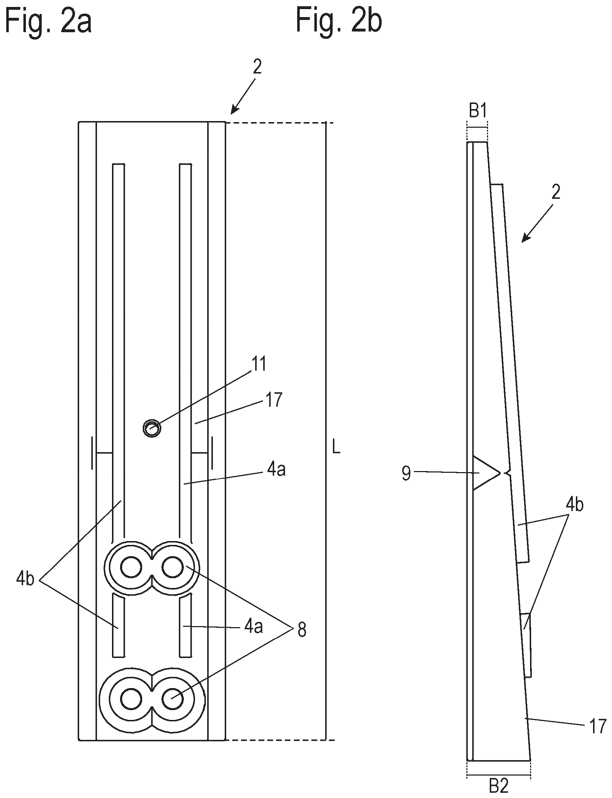

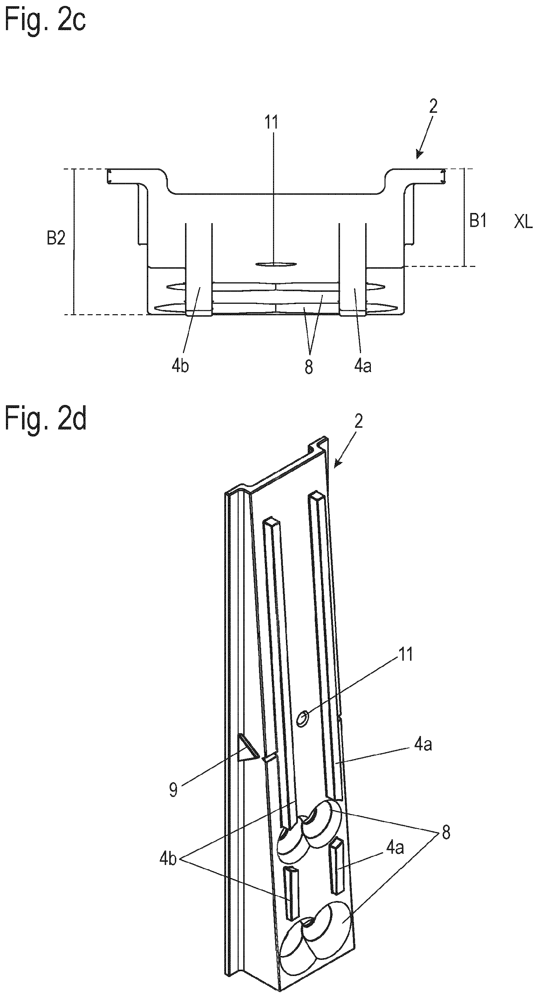

In Fig. 2a ist eine Draufsicht und in Fig. 2b eine Seitenansicht auf das Unterteil 2 aus Fig. 1 dargestellt, die die volle Längserstreckung L des Unterteils 2 zeigt. Wie besonders in Fig. 2b zu sehen ist, ist das Unterteil 2 im Wesentlichen keilförmig ausgebildet. Die Oberseite 17 des Unterteils 2 weist ein Loch 11 auf, in das das Befestigungsmittel 6 eingesetzt, insbesondere eingeschraubt, werden kann. Auf einer gegenüberliegenden Seite des Unterteils 2 zu der Oberseite 17 kann alternativ auch eine Mutter angeordnet sein, in die das Befestigungsmittel 6 eingeschraubt werden kann. Fig 2c zeigt eine Ansicht des Unterteils 2 in, beziehungsweise auch entgegen, Richtung R seiner Längserstreckung L. Es ist gut sichtbar, dass die minimale Breite B1 des Unterteils 2 geringer ist, als dessen maximale Breite B2. Fig. 2d zeigt eine isometrische Ansicht des Unterteils 2.

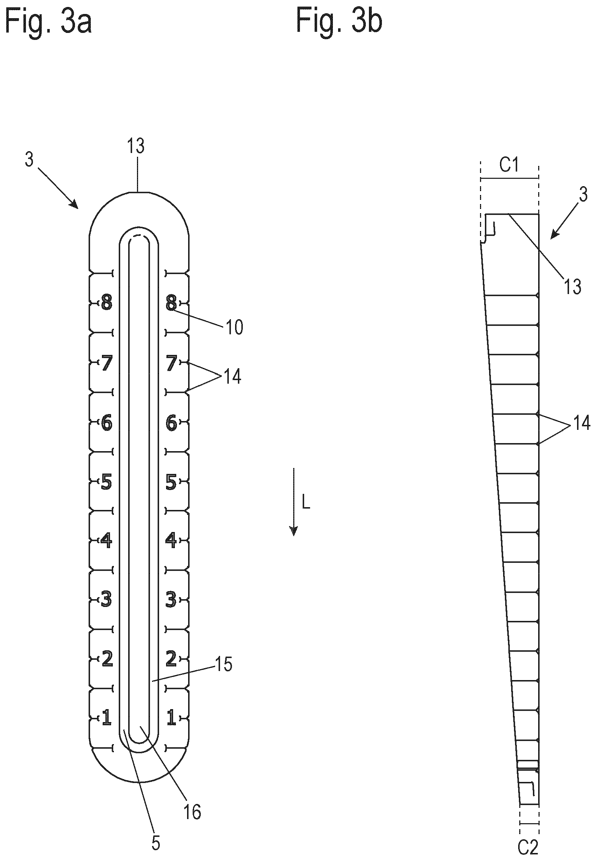

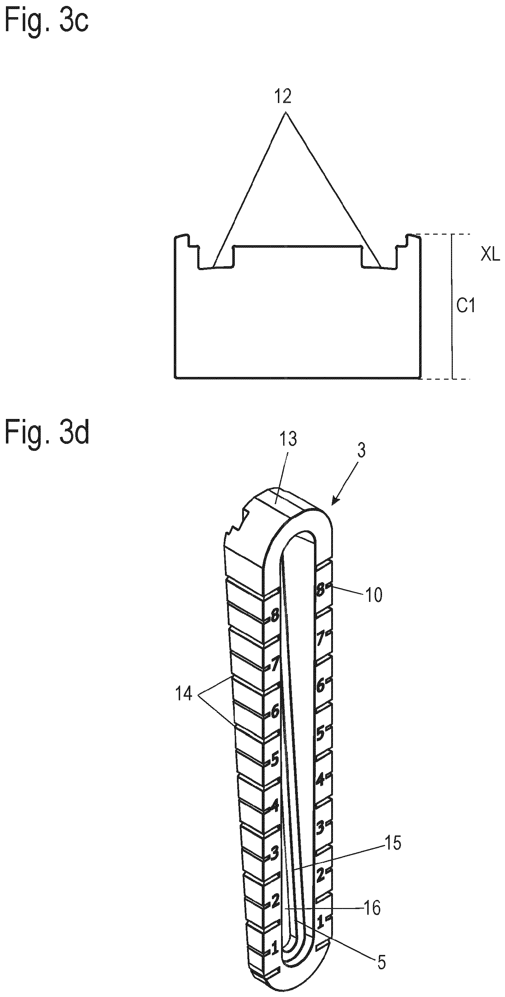

In Fig. 3a ist eine Draufsicht des Stellelementes 3 aus Fig. 1 dargestellt. Das Stellelement weist eine Nut 5 auf, die einen Nutboden 15 und einen Schlitz 16 umfasst, in dem das Befestigungsmittel 6 zur Fixierung an dem Unterteil 2 angeordnet werden kann. Der Umriss des Stellelementes 3 in Draufsicht ist bevorzugt stadionförmig, entspricht also in etwa einem Rechteck mit zwei jeweils endseitig angeordneten Halbkreisen. An dem Stellelement 3 sind optional Kerben 14 und/oder in einem Endbereich ist optional eine Fläche 13 ausgebildet. Fig. 3b zeigt eine Seitenansicht des Stellelementes 3. Die Längserstreckung des Stellelementes in Richtung R der Längserstreckung L des Unterteils L, entspricht optional der Längserstreckung L. Die minimale Breite C2 des Stellelements 3 ist geringer, als dessen maximale Breite C1. Das Stellelement 3 ist im Wesentlichen keilförmig ausgebildet. In Fig. 3c ist eine Draufsicht auf das Stellelement 3 in Richtung R der Längserstreckung L des Unterteils 2 dargestellt. Das Stellelements 3 weist die zwei Führungen 12 auf, die auf der mindestens einen Schiene 4 des Unterteils 2 geführt sein können. Fig. 3d zeigt eine isometrische Ansicht des Stellelements 3.

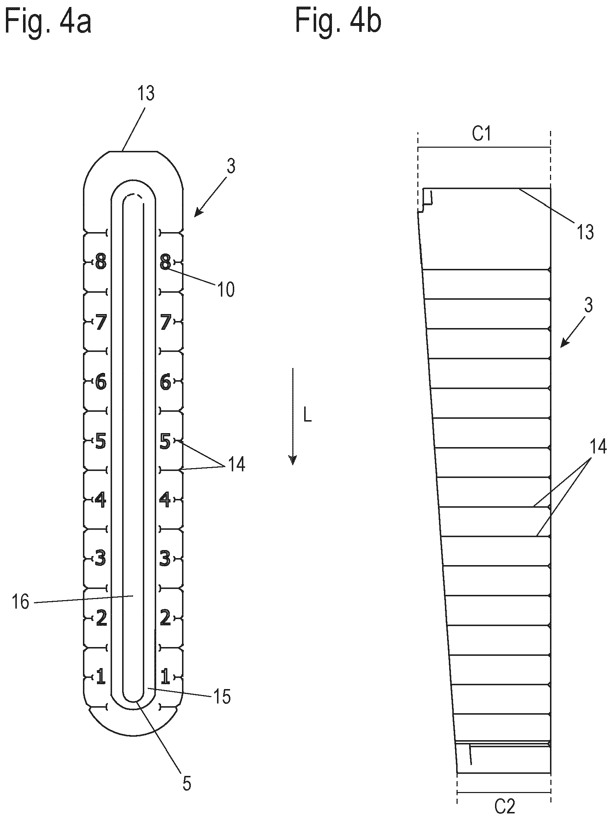

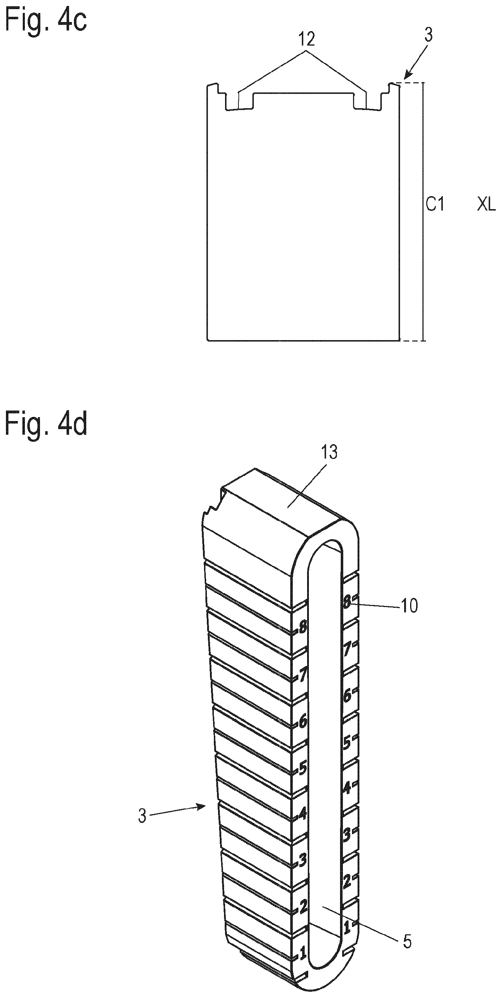

Die Fig. 4a bis 4d entsprechen im Wesentlichen den Fig. 3a bis 3d, wobei die maximale Breite C1 und die minimale Breite C2 des Stellelementes 3 jeweils größer sind als in dem zuvor gezeigten Ausführungsbeispiel.

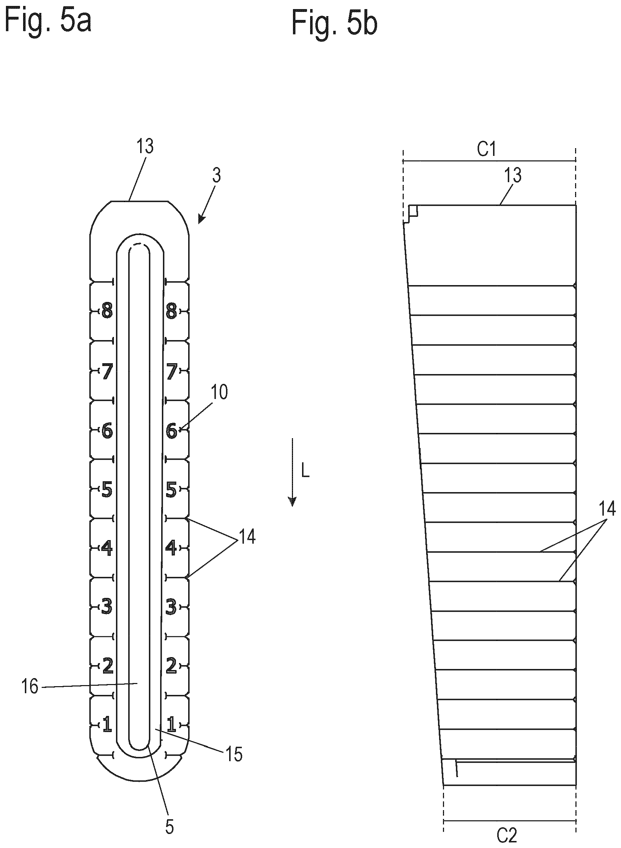

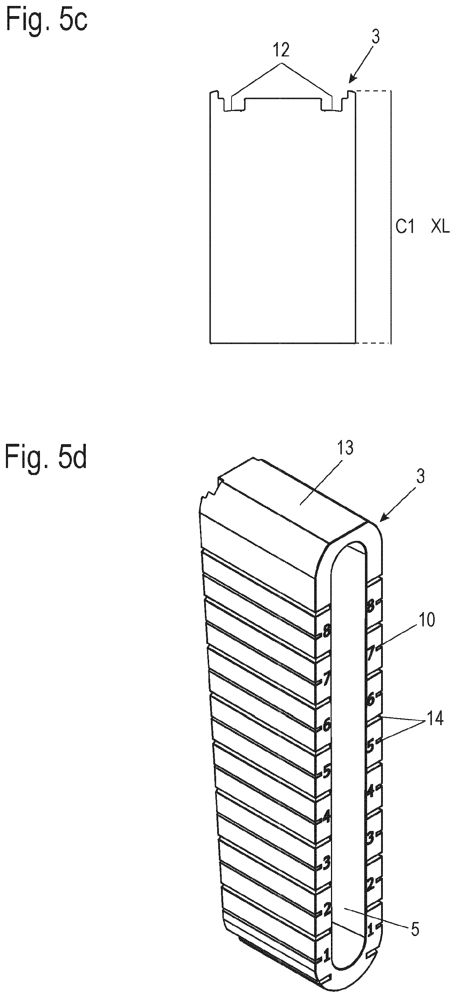

Die Fig. 5a bis 5d entsprechen im Wesentlichen den Fig. 3a bis 3d und 4a bis 4d, allerdings sind die maximale Breite C1 und die minimale Breite C2 des Stellelementes jeweils größer als in den zuvor gezeigten Ausführungsbeispielen.

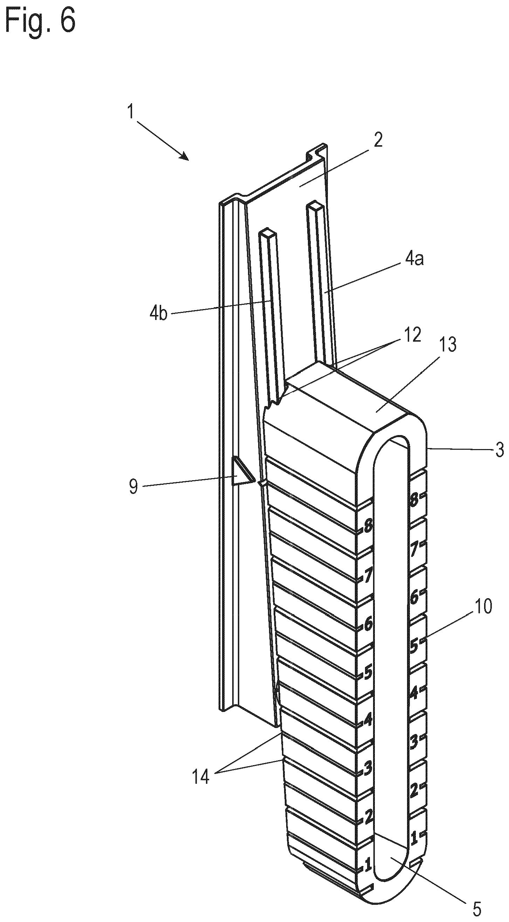

Fig. 6 zeigt eine isometrische Ansicht der Distanzvorrichtung 1, die ein Stellelement 3 gemäß dem in Fig. 4a bis 4d gezeigten Ausführungsbeispiel aufweist. Das dargestellte Ausführungsbeispiel der Fig. 6 entspricht ansonsten der Fig. 1.

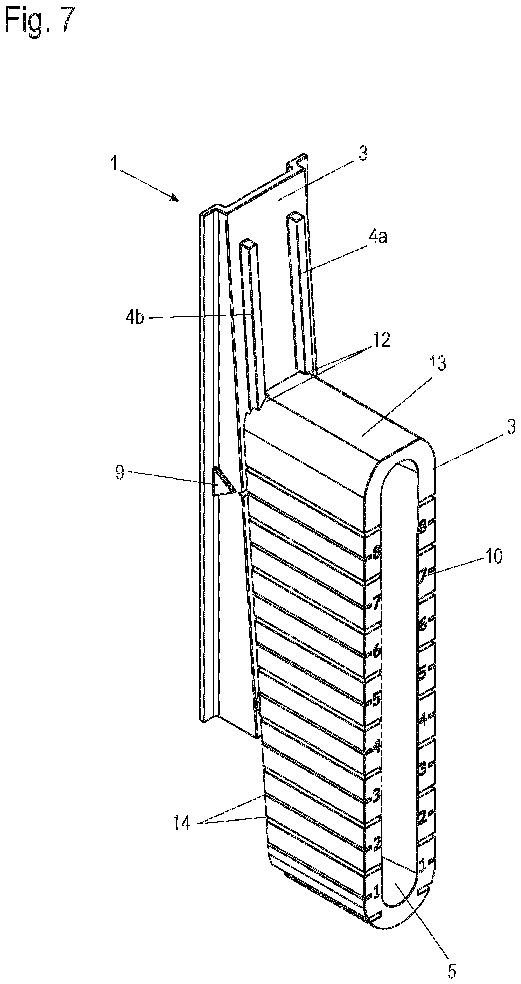

In Fig. 7 ist eine isometrische Ansicht der Distanzvorrichtung 1 dargestellt, die ein Stellelement 3 gemäß dem in Fig. 5a bis 5d gezeigten Ausführungsbeispiel aufweist, aber ansonsten den Fig. 1 und 6 entspricht.

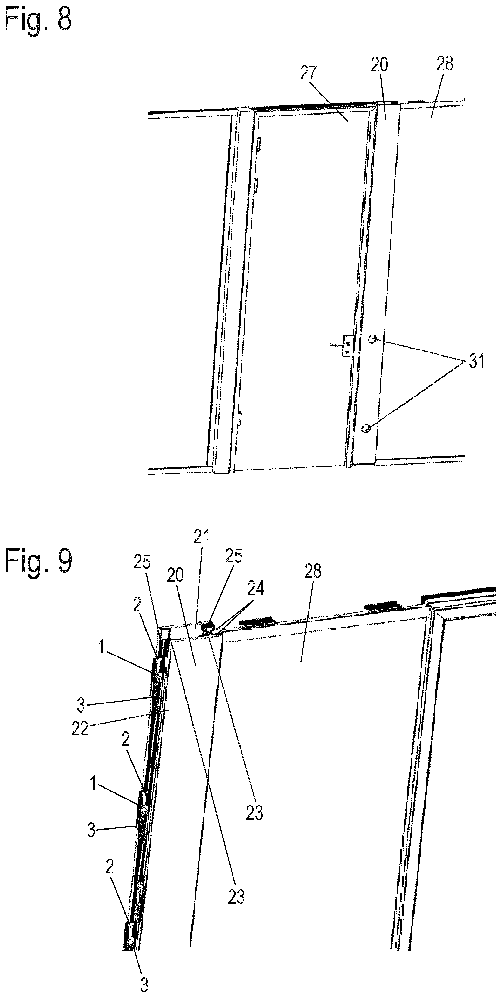

Fig. 8 zeigt eine Ansicht eines erfindungsgemäßen Trennwandelements 20 mittels dem eine Tür 27 mit einer Glasscheibe 28 eines Fensters verbunden ist. In dem Trennwandelement 20 ist mindestens eine Aussparung 31 ausgebildet. Diese kann beispielsweise für eine Steckdose oder einen Lichtschalter oder eine Türklingel oder Sicherungsvorrichtung vorgesehen sein.

Fig. 9 zeigt eine vergrößerte Ansicht des Trennwandelements 20 aus Fig. 8, das zwei plattenförmige Wandelemente 21, 22 aufweist, die so aneinander befestigt sind, dass zwischen ihnen ein Zwischenraum ausgebildet ist. Die Wandelemente 21, 22 sind parallel zueinander angeordnet. In dem dargestellten Beispiel sind die Wandelemente 21, 22 insbesondere der Figur entsprechend vertikal angeordnet und aneinander fixiert. Das Trennwandelement 20 weist mindestens eine erfindungsgemäße Distanzvorrichtung 1 auf, die an mindestens einer an dem Wandelement 21 befestigten Stellleiste 25 fixiert ist. In der dargestellten Variante weist das Trennwandelement optional zwei erfindungsgemäße Stellleisten auf. Das Unterteil 2 der mindestens einen Distanzvorrichtung 1 ist an der mindestens einen Stellleiste 25 befestigt und kann entlang der mindestens einen Stellleiste 25 vertikal versetzt werden.

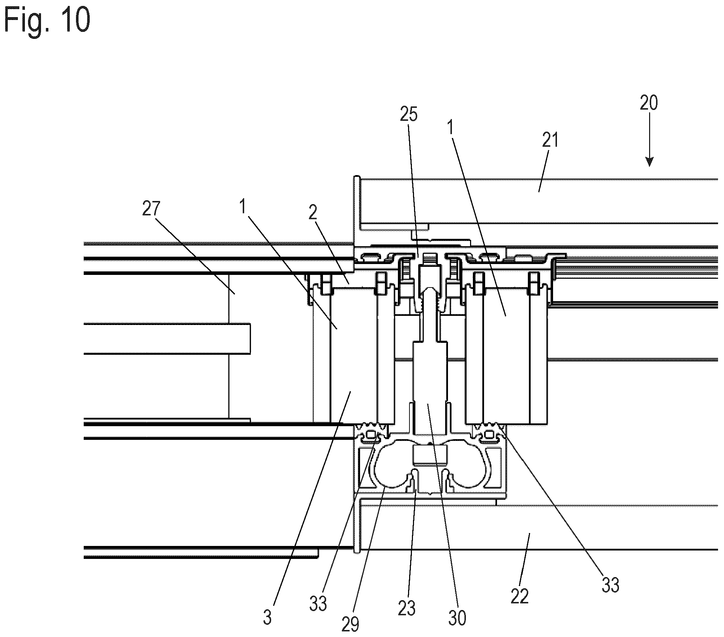

In Fig. 10 ist eine vergrößerte Draufsicht auf einen Teil des Trennwandelements 20 aus Fig. 8 mit der Tür 27 dargestellt. Wie zu sehen ist, weist das Trennwandelement 20 weiterhin mindestens eine Fixierung 30 auf, die hier eine Schraube ist, mittels der mindestens eine Halteleiste 23 an der mindestens einen Stellleiste 25 fixiert ist. An dem Wandelement 22 ist mindestens eine Halterung 29 fixiert und hierfür optional angeklebt, die ein Steckmittel aufweist, das in die mindestens eine Halteleiste 23 eingesteckt werden und an dieser rastend fixiert werden kann. An der mindestens einen Halterung 29 sind optionale Kontaktelemente 33 angeordnet, an denen die mindestens eine Distanzvorrichtung 1 und insbesondere deren Stellelement 3 anliegen kann. In dem dargestellten Beispiel sind an der in Fig. 10 zu sehenden mindestens einen Stellleiste 25 optional mindestens oder genau zwei Unterteile 2 und somit mindestens oder genau zwei Distanzvorrichtungen 1 montiert. Die Tür 27 ist auf eine dieser Distanzvorrichtungen 2 aufgeschoben und so zumindest formschlüssig und/oder flächenbündig mit dem Trennwandelement 20 verbunden.

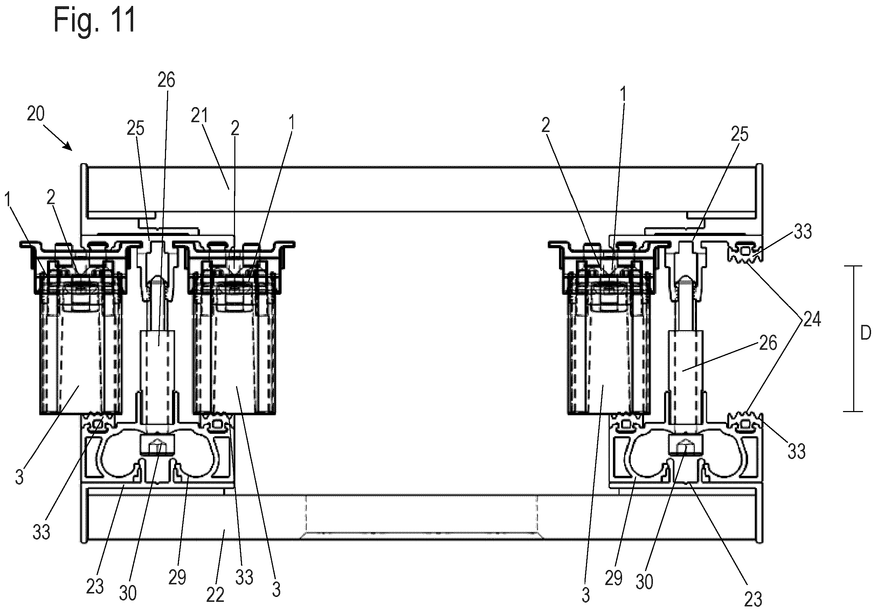

Fig. 11 zeigt eine Draufsicht des erfindungsgemäßen Trennwandelements 20 aus Fig. 8 bis 10. Das Trennwandelement 20 weist mindestens zwei, und hier optional mindestens drei, Distanzvorrichtungen 1 auf. Auf der in der Figur rechts angeordneten Seite des Trennwandelements 20 ist eine Distanzvorrichtung 1, die klemmend zwischen der Stellleiste 25 und der Halterung 29 angeordnet ist, montiert, wobei das Trennwandelement außerdem optional eine Lücke 24 aufweist, die durch zwei mit einem Abstand D voneinander entfernt angeordnete Kontaktelemente 32, die optional Dichtungen sein können, begrenzt ist, die jeweils Teil der Stellleiste 25 oder der mindestens einen Halterung 29 sind. Die als Schrauben ausgebildeten Fixierungen 30 weisen jeweils optional einen Kragen 26 auf. In die Lücke 24 kann optional die Glasscheibe 28 eines Fensters, wie in Fig. 8 eingesetzt sein.

In dem in Fig. 8 bis 11 dargestellten Beispiel ist eine Dimensionierung des Zwischenraums der Wandelemente 21, 22 durch Anpassung der Breiteneinstellung des mindestens einen Distanzelements 1 und/oder durch Verstellung der mindestens einen Fixierung 30, also durch weiteres Eindrehen der Schraube, veränderbar. Dies entspricht einer Veränderung der Distanz zwischen den Wandelementen 21, 22 senkrecht zu den Wandelementen 21, 22 durch Einstellung der Breite der Distanzvorrichtung 1. Die Dimensionierung der Lücke 24 ist ebenfalls durch Einstellung der Distanzvorrichtung 1 veränderbar.

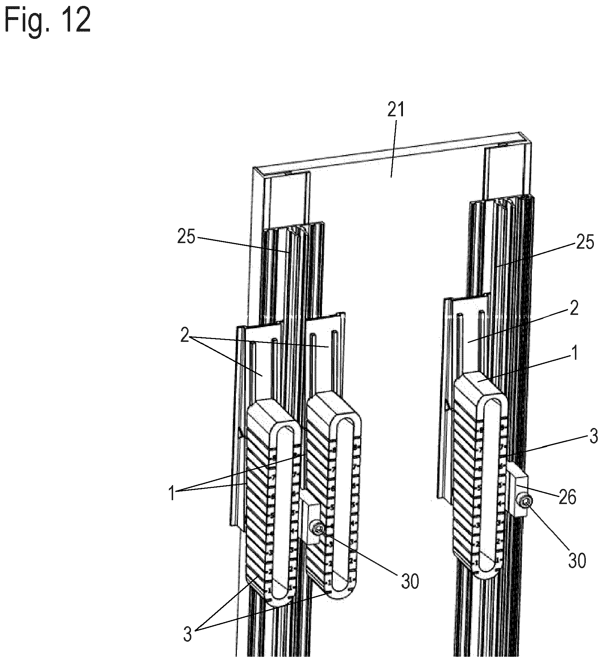

Fig. 12 zeigt das Wandelement 21, an dem zwei Stellleisten 25 aus Fig. 11 fixiert sind, an denen jeweils mindestens eine Distanzvorrichtung 1 angeordnet ist, deren Unterteil 2 an den Stellleisten 25 fixiert ist. Die Distanzvorrichtungen 1 und/oder das Stellmittel, an denen diese optional fixiert sein können, können in vertikaler Richtung entsprechend der Figur entlang der Stellleisten 25 variabel oder auch übereinander angeordnet werden.

### Bezugszeichenliste

- 1: Distanzvorrichtung
- 2: Unterteil
- 3: Stellelement
- 4: Schiene
- 5: Nut
- 6: Befestigungsmittel
- 7: Fixierelement
- 8: Vertiefung
- 9: Zeiger
- 10: Markierung
- 11: Loch
- 12: Führung
- 13: Fläche
- 14: Kerben
- 15: Nutboden
- 16: Schlitz
- 17: Oberseite

- 20: Trennwandelement
- 21: Wandelement
- 22: Wandelement
- 23: Halteleiste
- 24: Lücke
- 25: Stellleiste
- 26: Kragen
- 27: Tür
- 28: Glasscheibe
- 29: Halterung
- 30: Fixierung
- 31: Aussparung
- 33: Kontaktelement

- B1: Breite
- B2: Breite
- C1: Breite
- C2: Breite
- D: Abstand
- L: Längserstreckung
- H: Breitenrichtung
- R: Richtung der Längserstreckung L

## Patentansprüche

1. Trennwandelement (20), das zwei plattenförmige Wandelemente (21, 22) aufweist, die so aneinander befestigt sind, dass zwischen ihnen ein Zwischenraum ausgebildet ist, wobei das Trennwandelement (20) mindestens eine Distanzvorrichtung (1) umfasst, wobei die Distanzvorrichtung (1) ein im Wesentlichen keilförmiges Unterteil (2) und ein im Wesentlichen keilförmiges Stellelement (3) aufweist, das entlang einer Längserstreckung (L) des Unterteils (2) so verstellbar ist, dass eine senkrecht zu der Längserstreckung (L) verlaufende Breite der Distanzvorrichtung (1) eingestellt werden kann, wobei das Stellelement (3) mittels eines im Wesentlichen parallel zur Richtung der Breite der Distanzvorrichtung (1) verlaufenden Befestigungsmittels (6) klemmend an dem Unterteil (2) fixiert werden kann, sodass die Breite der Distanzvorrichtung (1) stufenlos einstellbar ist, wobei das Befestigungsmittel (6) in einer Nut (5) des Stellelements (3) angeordnet ist, sodass das Stellelement (3) zur Breiteneinstellung der Distanzvorrichtung (1) mittels des Befestigungsmittels (6) entlang der Nut (5) geführt werden kann, **dadurch gekennzeichnet, dass** das Trennwandelement (20) mindestens eine an einem der Wandelemente (21, 22) fixierte Stellleiste (25), an der die mindestens eine Distanzvorrichtung (1) montiert ist, und mindestens eine an dem anderen der Wandelemente (21, 22) fixierte Halteleiste (23), an der mindestens eine Halterung (29) fixiert ist, aufweist, wobei mindestens eine Fixierung (30) die mindestens eine Halterung (29) und die mindestens eine Stellleiste (25) zur Befestigung der Wandelemente (21, 22) aneinander verbindet, sodass zwischen mindestens einer der mindestens einen Stellleiste (25) und mindestens einer der mindestens einen Halterung (29) mindestens eine Lücke (24) ausgebildet ist und die mindestens eine Distanzvorrichtung (1) zwischen der mindestens einen Stellleiste (25) und der mindestens einen Halterung (29) klemmt.

2. Trennwandelement (20) nach Anspruch 1, **dadurch gekennzeichnet, dass** mindestens eine Glasscheibe (28) in der mindestens einen Lücke (24) angeordnet und/oder kraftschlüssig fixiert ist.

3. Trennwandelement (20) nach einem der Ansprüche 1 oder 2, **dadurch gekennzeichnet, dass** das Trennwandelement (20) eine Aussparung (31) aufweist, in der eine Vorrichtung angeordnet ist, die zumindest teilweise in dem Zwischenraum angeordnet sein kann.

4. Trennwandelement (20) nach einem der vorgehenden Ansprüche, **dadurch gekennzeichnet, dass** die Nut (5) einen Nutboden (15) und mindestens einen Schlitz (16) in dem Nutboden (15) aufweist.

5. Trennwandelement (20) nach einem der vorgehenden Ansprüche, **dadurch gekennzeichnet, dass** das Stellelement (3) Markierungen (10) zur Auswahl der Breiteneinstellung der Distanzvorrichtung (1) aus einer Mehrzahl von Breiteneinstellungen umfasst.

6. Trennwandelement (20) nach Anspruch 5, **dadurch gekennzeichnet, dass** die Markierungen (10) jeweils Dimensionierungen einstellbarer Breiteneinstellungen der Distanzvorrichtung (1) angeben.

7. Trennwandelement (20) nach einem der vorgehenden Ansprüche, **dadurch gekennzeichnet, dass** das Befestigungsmittel (6) mindestens eine Schraube umfasst.

8. Trennwandelement (20) nach mindestens den vorgehenden Ansprüchen 4 und 7, **dadurch gekennzeichnet, dass** ein Kopf der Schraube auf dem Nutboden (15) aufliegen kann, sodass der Nutboden (15) und folglich das Stellelement (3) mittels Festdrehens der Schraube klemmend fixiert werden kann.

9. Trennwandelement (20) nach einem der Ansprüche 7 oder 8, **dadurch gekennzeichnet, dass** der Kopf der Schraube vollständig in der Nut (5) aufgenommen ist.

10. Trennwandelement (20) nach einem der vorgehenden Ansprüche, **dadurch gekennzeichnet, dass** das Unterteil (2) und/oder das Stellelement (3) aus einem formstabilen Material, insbesondere aus Kunststoff gefertigt sind.

11. Trennwandelement (20) nach einem der vorgehenden Ansprüche, **dadurch gekennzeichnet, dass** das Stellelement (3) mindestens eine Führung (12) aufweist, mittels der das Stellelement auf mindestens einer Schiene (4) an dem Unterteil (2) geführt sein kann.

## Claims

1. Partition element (20) comprising two plate-shaped wall elements (21, 22) which are fastened to each other in such a way that an intermediate space is formed between them, wherein the partition element (20) comprises at least one spacer device (1), wherein the spacer device (1) comprises a substantially wedge-shaped lower part (2) and a substantially wedge-shaped adjustment element (3) that can be adjusted along a longitudinal extension (L) of the lower part (2) so that a width of the spacer device (1) extending perpendicular to the longitudinal extension (L) can be set, wherein the adjustment element (3) can be fixed in a clamping manner to the lower part (2) by means of a fastening means (6) extending substantially parallel to the direction of the width of the spacer device (1), so that the width of the spacer device (1) is continuously adjustable, wherein the fastening means (6) is arranged in a groove (5) of the adjustment element (3), so that the adjustment element (3) can be guided along the groove (5) by means of the fastening means (6) in order to adjust the width of the spacer device (1), **characterized in that** the partition element (20) has at least one adjustment strip (25) fixed to one of the wall elements (21, 22), on which the at least one spacer device (1) is mounted, and at least one retaining strip (23) fixed to the other of the wall elements (21, 22), to which at least one bracket (29) is fixed, wherein at least one fixing element (30) connects the at least one bracket (29) and the at least one adjustment strip (25) to fasten the wall elements (21, 22) to each other, so that at least one gap (24) is formed between at least one of the at least one adjustment strip (25) and at least one of the at least one bracket (29), and the at least one spacer device (1) clamps between the at least one adjustment strip (25) and the at least one bracket (29).

2. Partition element (20) according to claim 1, **characterized in that** at least one glass pane (28) is arranged and/or fixed in a force-fitting manner in the at least one gap (24).

3. Partition element (20) according to one of claims 1 or 2, **characterized in that** the partition element (20) has a recess (31) in which a device is arranged which can be arranged at least partially in the intermediate space.

4. Partition element (20) according to one of the preceding claims, **characterized in that** the groove (5) has a groove base (15) and at least one slot (16) in the groove base (15).

5. Partition element (20) according to one of the preceding claims, **characterized in that** the adjustment element (3) comprises markings (10) for selecting the width setting of the spacer device (1) from a plurality of width settings.

6. Partition element (20) according to claim 5, **characterized in that** the markings (10) each indicate dimensions of adjustable width settings of the spacer device (1).

7. Partition element (20) according to one of the preceding claims, **characterized in that** the fastening means (6) comprises at least one screw.

8. Partition element (20) according to at least the preceding claims 4 and 7, **characterized in that** a head of the screw can rest on the groove base (15) so that the groove base (15) and consequently the adjustment element (3) can be clamped in place by tightening the screw.

9. Partition element (20) according to one of claims 7 or 8, **characterized in that** the head of the screw is completely accommodated in the groove (5).

10. Partition element (20) according to one of the preceding claims, **characterized in that** the lower part (2) and/or the adjustment element (3) are made of a dimensionally stable material, in particular plastic.

11. Partition element (20) according to one of the preceding claims, **characterized in that** the adjustment element (3) has at least one guide (12) by means of which the adjustment element can be guided on at least one rail (4) on the lower part (2).

## Revendications

1. Élément de cloison (20) comportant deux éléments de paroi (21, 22) en forme de panneaux qui sont fixés l'un à l'autre de telle sorte qu'un espace intermédiaire est formé entre eux, lequel élément de cloison (20) comprend au moins un dispositif d'écartement (1),
dans lequel le dispositif d'écartement (1) comporte une partie inférieure (2) sensiblement en forme de coin et un élément d'ajustement (3) sensiblement en forme de coin qui peut être déplacé le long d'une étendue longitudinale (L) de la partie inférieure (2) de telle façon qu'une largeur du dispositif d'écartement (1) perpendiculaire à l'étendue longitudinale (L) peut être ajustée,
dans lequel l'élément d'ajustement (3) peut être fixé par serrage sur la partie inférieure (2) au moyen d'un moyen de fixation (6) sensiblement parallèle au sens de la largeur du dispositif d'écartement (1) de telle sorte que la largeur du dispositif d'écartement (1) peut être ajustée sans palier, le moyen de fixation (6) étant disposé dans une rainure (5) de l'élément d'ajustement (3) de telle sorte que l'élément d'ajustement (3) peut être guidé le long de la rainure (5) en vue de l'ajustement de la largeur du dispositif d'écartement (1) au moyen du moyen de fixation (6), **caractérisé en ce que** l'élément de cloison (20) comporte au moins une réglette d'ajustement (25) fixée sur l'un des éléments de paroi (21, 22), sur laquelle l'au moins un dispositif d'écartement (1) est monté, et au moins une réglette de maintien (23) fixée à l'autre des éléments de paroi (21, 22), sur laquelle au moins une monture (29) est fixée, au moins une fixation (30) reliant l'au moins une monture (29) et l'au moins une réglette d'ajustement (25) pour fixer les éléments de paroi (21, 22) l'un à l'autre de telle sorte qu'au moins une lacune (24) est formée entre au moins une de l'au moins une réglette d'ajustement (25) et au moins une de l'au moins une monture (29) et l'au moins un dispositif d'écartement (1) serrant entre l'au moins une réglette d'ajustement (25) et l'au moins une monture (29).

2. Élément de cloison (20) selon la revendication 1, **caractérisé en ce qu'**au moins une vitre (28) est disposée dans l'au moins une lacune (24) et/ou fixée par friction.

3. Élément de cloison (20) selon l'une des revendications 1 ou 2, **caractérisé en ce que** l'élément de cloison (20) comporte une découpe (31) dans laquelle est disposé un dispositif qui peut être disposé au moins partiellement dans l'espace intermédiaire.

4. Élément de cloison (20) selon l'une des revendications précédentes, **caractérisé en ce que** la rainure (5) comporte un fond de rainure (15) et au moins une fente (16) dans le fond de rainure (15).

5. Élément de cloison (20) selon l'une des revendications précédentes, **caractérisé en ce que** l'élément d'ajustement (3) comprend des marquages (10) pour la sélection du réglage en largeur du dispositif d'écartement (1) parmi plusieurs réglages en largeur.

6. Élément de cloison (20) selon la revendication 5, **caractérisé en ce que** les marquages (10) indiquent chacun des dimensionnements de réglages en largeur réglables du dispositif d'écartement (1).

7. Élément de cloison (20) selon l'une des revendications précédentes, **caractérisé en ce que** le moyen de fixation (6) comprend au moins une vis.

8. Élément de cloison (20) selon au moins les revendications 4 et 7, **caractérisé en ce qu'**une tête de la vis peut reposer sur le fond de rainure (15), de telle sorte que le fond de rainure (15) et, en conséquence, l'élément d'ajustement (3) peuvent être fixés par serrage au moyen du serrage de la vis.

9. Élément de cloison (20) selon l'une des revendications 7 ou 8, **caractérisé en ce que** la tête de la vis est complètement logée dans la rainure (5).

10. Élément de cloison (20) selon l'une des revendications précédentes, **caractérisé en ce que** la partie inférieure (2) et/ou l'élément d'ajustement (3) sont fabriqués dans un matériau de forme stable, en particulier en matière plastique.

11. Élément de cloison (20) selon l'une des revendications précédentes, **caractérisé en ce que** l'élément d'ajustement (3) comporte au moins un guide (12) au moyen duquel l'élément d'ajustement peut être guidé sur au moins un rail (4) sur la partie inférieure (2).
